# EUROPEAN PATENT SPECIFICATION

(11) **EP 3 694 931 B1**
(45) Date of publication and mention of the grant of the patent: **21.12.2022**
(21) Application number: 18789571.9
(22) Date of filing: 10.10.2018
(51) Int. Cl.: C09D 5/00

(54) **SURFACE COATING**
OBERFLÄCHENBESCHICHTUNG
REVÊTEMENT DE SURFACE

(30) Priority: 10.10.2017 GB 201716551
(43) Date of publication of application: 19.08.2020
(73) Proprietor: The University Court of the University of Edinburgh, Edinburgh EH8 9YL (GB)
(72) Inventor: WELLS, Gary George, Newcastle-upon-Tyne NE1 8ST (GB); LEDESMA-AGUILAR, Rodrigo, Newcastle-upon-Tyne NE1 8ST (GB)
(74) Representative: Marks & Clerk LLP
(86) International application number: PCT/EP2018/077652
(87) International publication number: WO 2019/072940

(56) References cited:
- US-A1- 2003 203 991
- US-A1- 2008 114 096
- US-A1- 2012 070 647

## Description

### Technical Field

The present disclosure relates to a composition for providing a surface coating on a substrate surface, a method for providing the composition, a method of using the composition to provide a surface coating on a substrate, and the surface coating itself.

### Background

The listing or discussion of an apparently prior-published document in this specification should not necessarily be taken as an acknowledgement that the document is part of the state of the art or is common general knowledge.

The current development of liquid-repellent surfaces, such as such as a slippery liquid infused porous surface (SLIPS^{™}) is inspired by the self-cleaning abilities of many natural surfaces on animals, insects, and plants. Water droplets on these natural substrate surfaces roll off or slide off easily, carrying the dirt or insects away with them. The presence of the micro/nanostructures on many of these natural substrate surfaces has been attributed to the water-repellent function. These observations have led to interest in manufacturing biomimetic water-repellent surfaces in the past decade, owing to their broad spectrum of potential applications, ranging from water-repellent fabrics to friction-reduction surfaces.

However, current methods of production for this type of surface typically involve several steps and sometimes expensive techniques, such as photolithographic production. This type of production can lead to fabrication problems on non-uniform substrate surfaces, large scale substrate surfaces and/or large area substrate surfaces, and often requires the use of two or more distinct steps. For example, it requires the substrate to have a porous micro or nano-structure to which the lubricant can adhere to. Substrates that do not have such a surface structure require additional modification.

The present inventors have surprisingly and unexpectedly found that the use of a composition as defined in the present application results in a repellent surface that can be provided on any substrate in a single step.

US2012/070647A1 describes articles and gloves having a polymer coating on at least a portion of the article or gloves's surface, wherein the polymer coating comprises a polyurethane dispersion made from the reaction product of an isocyanate functional prepolymer, a chain extender, and a chain terminator; and methods for making the same.

US2008/114096A1 describes a network composition comprising a plurality of associated saccharide chains wherein a chain comprises at least one saccharide component; and at least one first monomer, at least one second monomer, or combinations of both; wherein the first monomer is linked to the saccharide component by ester linkages; ether linkages; amide linkages; ketone linkages; or combinations thereof; wherein the second monomer is linked to the saccharide component by ester linkages; ether linkages; amide linkages; ketone linkages; urea linkages; carbamate linkages, aluminum oxide linkages; siloxane linkages; or combinations thereof; wherein first monomers are linked to each other by ester linkages; ether linkages; amide linkages; ketone linkages; or combinations thereof; wherein the first monomer is linked to the second monomer by ester linkages; ether linkages; amide linkages; ketone linkages; urea linkages; carbamate linkages; aluminum oxide linkages; siloxane linkages or combinations thereof; wherein the second monomers are linked to each other by ester linkages; ether linkages; amide linkages; ketone linkages; polyvinyl linkages, polyolefin linkages, urea linkages; carbamate linkages, aluminum oxide linkages, siloxane linkages or combinations thereof; and wherein the saccharide components are linked to each other by ester linkages; ether linkages; amide linkages; ketone linkages; or combinations thereof; wherein the network is capable of adhering to a substrate.

US2003/203991A1 describes a coating composition which comprises an aqueous polymeric matrix, a hydrophilic polymer, a colloidal metal oxide and a crosslinker.

### Summary

The present invention comprises a composition, a surface coating and methods for providing a composition and surface coating as defined in the claims. Embodiments that do not fall within the scope of the claims are to be interpreted as examples useful for understanding the invention.

According to a first aspect, there is provided a composition for providing a surface coating with a coefficient of friction of less than 0.1 on a substrate surface, wherein the composition comprises:
(i) Particles;
(ii) A lubricant; and
(iii) A solvent,
wherein the particles (i) are selected from one or more of silica particles, carbon particles, transition metal or transition metal oxide particles and aluminium based particles; the lubricant (ii) is selected from one or more of oils, silicone oils, vegetable oils, mineral oils, paraffin oils, Fluorinert^{™} FC-770, Krytox^{™} lubricants, choline, phosphonium and sulphonium and the solvent (iii) is selected from one or more of propanol, ethanol, methanol, ethyl acetate, acetone, pentane, hexane, toluene, chloroform and dichloromethane.

The composition may be suitable for providing a slippery liquid infused porous surface.

The total weight of the particles may be from about 0.1% to about 1%, such as from about 0.2% to about 0.5%, or from about 0.2% to about 0.3% of the total weight of the composition. Alternatively, the total weight of the particles may be from about 0.05% to about 2.5% or from about 0.1% to about 1%, such as from about 0.2% to about 0.5%, or from about 0.2% to about 0.3% of the total weight of the particles and lubricant.

The total weight of the lubricant may be from about 1 to about 99 % of the total weight of the composition, such as from about 20 to about 95% or from about 40 to about 90% or from about 60 to about 85% of the total weight of the composition.

The total weight of the solvent may be from about 1 to about 99 % of the total weight of the composition, such as from about 10 to about 75% or from about 20 to about 50% of the total weight of the composition.

The total weight of the particles in the composition may be up to 5% or up to 50% of the weight of the lubricant. Preferably, the total weight of the particles in the composition may be from about 0.05 to about 5%, such as from about 0.1% to about 4% or from about 0.1% to about 2% of the weight of the lubricant.

The total weight of the particles in the composition may be up to 5% of the weight of the solvent. Preferably, the total weight of the particles in the composition may be from 0.1% to 4% of the weight of the solvent, such as from about 0.15% to about 2.5% of the weight of the solvent.

The total weight of the lubricant in the composition may be up to 99% of the weight of the solvent. Preferably, the total weight of the lubricant in the composition may be from about 10 to about 90% of the weight of the solvent.

The particles (i) may have an average diameter of one or more of from about 10nm to about 100µm or from about 20nm to about 50µm, preferably one or more of from about 10nm to about 900nm or from about 20nm to about 400nm.

The lubricant (ii) may have a viscosity at room temperature of one or more of less than about 1000 cSt, less than about 100 cSt, and less than about 50 cSt.

The lubricant (ii) may have a vapour pressure at room temperature of one or more of less than about 0.1mmHg, less than about 0.01mmHg, and less than about 0.0001mmHg.

The lubricant may be substantially non-volatile.

By the terms "substantially non-volatile" and "non-volatile", we mean that the lubricant does not readily evaporate into a gas at room temperature. For example, at least 80%, such as at least 90% or at least 95% or 100% of the lubricant does not evaporate at room temperature.

At least one of the viscosity and vapour pressure of the lubricant may be such that the composition is in the form of one or more of a liquid, suspension, colloid, mixture and fluid. For example, the composition may be in the form of a liquid suspension, i.e. a liquid with the particles suspended within the lubricant.

At least one of the lubricant (ii) and the particles (i) may be one or more of hydrophobic, oleophobic and lyophobic.

The lubricant (ii) may comprise Fluorinert^{™} FC-770 or Krytox^{™} lubricants, choline.

The solvent (iii) may have a vapour pressure at room temperature of greater than about 2kPa.

According to a second aspect, there is provided a method for providing the composition of the first aspect, the method comprising mixing the particles (i), lubricant (ii) and solvent (iii) as defined above together.

The particles (i) and solvent (iii) may be mixed together before being added to the lubricant (ii).

The particles (i), lubricant (ii) and solvent (iii) may be mixed together for one or more of at least 10 minutes, and at least 20 minutes.

The mixing may be conducted in an ultrasonic bath or by some other homogenisation method.

According to a third aspect, there is provided a method for providing a surface coating on a substrate surface comprising:
Applying the composition of the first aspect to a substrate surface; and
Evaporating the solvent (iii) from the composition.

The substrate surface may comprise one or more of inner surfaces of microfluidic channels, outer surfaces of vehicles, outer surfaces of machinery, inner surfaces of food packaging, outer surfaces of food processing equipment, inner surfaces of pipes, storage tanks or vessels, outer surfaces of electronic devices or displays, and outer surfaces of buildings.

The composition may be applied to the substrate surface using one or more of spin coating, dip coating, spray coating, painting, printing and roll-to-roll coating.

The solvent (iii) may be evaporated at room temperature.

According to a fourth aspect, there is provided a surface coating on a substrate surface obtained using the method of the third aspect.

At least one of the viscosity and vapour pressure of the lubricant may be such that, after evaporation of the solvent, the surface coating is in the form of one or more of a liquid, suspension, colloid, mixture and fluid during use (e.g. at room temperature and pressure). The total weight of the particles in the surface coating may be from about 0.22 to about 0.33 % of the total weight of the surface coating (i.e. the surface coating that remains on the substrate surface after the solvent has been evaporated).

As herein described, there is provided a composition for forming a liquid-repelling coating on a substrate surface on which the composition is deposited, the composition comprising a plurality of particles, a solvent and a lubricant,
wherein the solvent is configured to disperse the plurality of particles within the composition, and enable the particles to migrate to the substrate surface on evaporation of the solvent to form a porous structure thereon, and
wherein the lubricant is immiscible in the liquid, and is configured to be imbibed into the porous structure formed by the plurality of particles to form the liquid-repelling coating.

Also described herein, there is provided a method of making the composition described above, the method comprising:
mixing together the plurality of particles, the solvent and the lubricant.

As herein described, there is provided a method of forming a liquid-repelling coating on a substrate surface using the composition of the fifth aspect, the method comprising:
depositing the composition onto the substrate surface; and
evaporating the solvent to enable the plurality of particles to migrate to the substrate surface to form a porous structure thereon, and allow the lubricant to be imbibed into the porous structure formed by the plurality of particles.

Also described herein, there is provided a liquid-repelling coating formed using the method described above.

The steps of any method disclosed herein do not have to be performed in the exact order disclosed, unless explicitly stated or understood by the skilled person.

Corresponding computer programs for implementing one or more steps of the methods disclosed herein are also within the present disclosure and are encompassed by one or more of the described example embodiments.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

The above summary is intended to be merely exemplary and non-limiting.

### Brief Description of the Figures

Figure 1a shows a liquid droplet on a solid substrate surface which attracts the liquid;
Figure 1b shows a liquid droplet on a solid substrate surface which repels the liquid;
Figure 2 shows component mixture ratios used to provide a surface coating described herein;
Figure 3 shows a plot of the tilting angle relative to the wt. percentage of particles within a composition described herein; and
Figure 4 shows further component mixture ratios used to provide a surface coating described herein.

### Description of Specific Aspects/Embodiments

The present inventors have found that a composition comprising (i) particles; (ii) a lubricant; and (iii) a solvent as defined in Claim 1 can be used to provide a surface coating with a coefficient of friction of less than 0.1 (such as a slippery liquid infused porous surface (SLIPS^{™})) on many substrate surfaces, including uniform and non-uniform substrate surfaces.

The surface coating may be used to prevent objects from adhering to or sticking to the substrate surface. Materials that can be prevented from adhering to or sticking to the surface coating are referred to herein as the "object to be repelled". The object to be repelled may be a solid, a liquid or a mixture of solid and liquid. If the object is a liquid it may be referred to as the "liquid to be repelled". If the object is a solid it may be referred to as the "solid to be repelled". If the object is a mixture of solid and liquid it may be referred to as the "mixture to be repelled". Furthermore, the term "repel" may be taken to encompass an absence of attraction in addition to repulsion.

### Composition for providing a surface coating

The composition for providing a surface coating with a coefficient of friction of less than 0.1 as defined in Claim 1 comprises (or consists essentially or consists of) particles; a lubricant; and a solvent, wherein the particles (i) are selected from one or more of silica particles, carbon particles, transition metal or transition metal oxide particles and aluminium based particles; the lubricant (ii) is selected from one or more of oils, silicone oils, vegetable oils, mineral oils, paraffin oils, Fluorinert^{™} FC-770, Krytox^{™} lubricants, choline, phosphonium and sulphonium and the solvent (iii) is selected from one or more of propanol, ethanol, methanol, ethyl acetate, acetone, pentane, hexane, toluene, chloroform and dichloromethane.

The composition for providing a surface coating may be in the form of one or more of a liquid, suspension, colloid, mixture and fluid.

### The particles

The particles are configured to form (e.g. via diffusion and eventually adhesion) a porous structure on a substrate surface to which the composition is to be applied to allow the lubricant to be imbibed onto the surface.

The particles may be liquid repelling or liquid phobic (e.g. fluidphobic/lyophobic, hydrophobic and/or oleophobic/lipophobic).

As used herein, the term "liquid repelling" or "liquid phobic" when used to describe the particles may be taken to mean that the interaction between the liquid and the particles results in the liquid having a contact angle of greater than 90 degrees with the particles. For example, the particles may be hydrophobic and have a contact angle of greater than 90 degrees with water, or they may be oleophobic or lipophobic and have a contact angle of greater than 90 degrees with oil.

The particles may have an average diameter which is substantially smaller than the average diameter of the object to be repelled (e.g. microparticles or nanoparticles). For example, the particles may have an average diameter from about 10nm to about 100µm (such as from about 20nm to about 50µm). In some cases, the particles may have an average diameter of 10nm to about 900nm (such as from about 20nm to about 400nm). The term "diameter" may be taken to mean the volume-based particle size, the areabased particle size, the weight-based particle size, or a combination of one or more of the same.

Examples of particles that may be used in the composition include, but are not limited to, mesoporous silica and/or silanised silica particles, soot/carbon black particles, hydrophobic sand particles, aluminium oxide or nitride particles, copper nano-spheres, silica nano-beads, iron oxide nano-powders, titianium nano-particles, tungsten oxide nano-powder and zinc oxide nano-wires.

Furthermore, although the particles may be substantially spherical, they need not be. In this respect, the particles could be any shape capable of forming a porous structure on the substrate surface.

### The lubricant

The lubricant is configured to be imbibed (e.g. via capillary action) into the porous structure formed by the particles. In other words, the lubricant is absorbed into the spaces between the particles of the porous structure. To facilitate this, the lubricant may have a surface tension of at least 15mN/m at room temperature. In some cases, the surface tension of the lubricant may be between 15 and 100mN/m or between 30 and 75mN/m at room temperature.

Typically, at least about 20% by weight of the lubricant is imbibed in the porous structure formed by the particles, for example, at least about 40% by weight of the lubricant, such as at least about 60%, 70% or 80% by weight of the lubricant. The minimum amount of lubricant required to provide the surface coating is typically the amount required to form a thermodynamically stable layer in the porous structure formed by the particles.

The lubricant may be configured to repel an object from the surface coating, and may be chemically inert with respect to the substrate surface and the object. If the object to be repelled is a liquid, the lubricant may be referred to as "liquid repelling" or "liquid phobic" (e.g. fluidphobic/lyophobic, hydrophobic and/or oleophobic/lipophobic). As used herein, the term "liquid repelling" or "liquid phobic" when used to describe the lubricant may be taken to mean that the interaction between the liquid and the lubricant results in the liquid having a contact angle of greater than 90 degrees with the lubricant. For example, an oil-based lubricant may be imbibed into the porous structure formed by the particles (which may or may not be hydrophobic) to create a hydrophobic surface coating. Alternatively, a water-based lubricant may be imbibed into the porous structure formed by the particles (which may or may not be oleophobic/lipophobic) to create an oleophobic/lipophobic surface coating.

The lubricant may have a relatively high density. For example, the lubricant may have a density at room temperature (i.e. from about 15°C to about 30°C) that is more than 1.0 g/cm³, more than 1.6 g/cm³, or even more than 1.9 g/cm³. To aid repulsion, the density of the lubricant may be greater than that of the object to be repelled. High density fluids reduce the tendency of any impacting liquid to 'sink' below the surface of the lubricant and to become entrained therein. Where the object to be repelled is smaller than its capillary length (assuming the object to be repelled is a liquid), then the lubricant may have a density lower than that of the object.

The lubricant may have a low freezing temperature, such as lower than -5° C., lower than -25° C., or even lower than -80° C. A low freezing temperature allows the lubricant to maintain its slippery behaviour at reduced temperatures and to repel a variety of liquids or solidified fluids, such as ice and the like, for applications such as anti-icing surfaces.

The lubricant may have a low evaporation rate at room temperature, such as less than 1 nm/s, less than 0.1 nm/s, or even less than 0.01 nm/s. A low evaporation rate allows for the surface coating to remain highly repellent for a long period without the need for recoating.

The lubricant may be selected such that the object to be repelled has a small or substantially no contact angle hysteresis. Lubricants with a low kinematic viscosity (i.e., <10 cm²/s or 1000 cSt, such as <1 cm²/s or 100 cSt at room temperature) tend to produce surfaces with low contact angle hysteresis. For example, a contact angle hysteresis of less than about 5°, 2.5°, 2°, or even less than 1° may be obtained. Thus, the lubricant may have a kinematic viscosity of less than about 1000 cSt, such as less than about 100 cSt or less than about 50 cSt at room temperature. For example, the lubricant may have a viscosity of from about 2 cSt to about 1000 cSt, or from about 10 cSt to about 500 cSt, such as from about 20 cSt to about 100 cSt at room temperature.

The lubricant may have a vapour pressure of less than about 0.1 mmHg, such as less than about 0.01 mmHg, or less than about 0.0001 mmHg at room temperature. For example, the lubricant may have a vapour pressure of from about 0.00001 to about 0.1 mmHg or from about 0.001 to about 0.01 mmHg at room temperature.

The lubricant may be non-volatile.

At least one of the viscosity and vapour pressure of the lubricant may be such that, after evaporation of the solvent, the surface coating is in the form of one or more of a liquid, suspension, colloid, mixture and fluid.

Example oils that may be used include, but are not limited to, silicon oil, vegetable oil, mineral oil, perfluoropolyether oil (e.g. Krytox) and paraffin oil. Alternatively, the lubricant may be a fluorinated hydrocarbon, such as Fluorinert FC-770, or ionic liquids, such as choline, phosphonium or sulphonium.

Specific examples of lubricants that may be used include, but are not limited to, perfluorinated hydrocarbons or organosilicone compound (e.g. silicone elastomer) and the like. In particular, the tertiary perfluoroalkylamines (such as perfluorotri-n-pentylamine, FC-70 by 3M, perfluorotri-n-butylamine FC-40, etc), perfluoroalkylsulfides and perfluoroalkylsulfoxides, perfluoroalkylethers, perfluorocycloethers (like FC-77) and perfluoropolyethers (such as KRYTOX family of lubricants by DuPont), perfluoroalkylphosphines and perfluoroalkylphosphineoxides as well as their mixtures can be used for these applications, as well as their mixtures with perfluorocarbons and any and all members of the classes mentioned. In addition, long-chain perfluorinated carboxylic acids (e.g., perfluorooctadecanoic acid and other homologues), fluorinated phosphonic and sulfonic acids, fluorinated silanes, and combinations thereof can be used. The perfluoroalkyl group in these compounds could be linear or branched and some or all linear and branched groups can be only partially fluorinated.

The lubricant may be selected depending on the what substrate surface the composition is to be applied to and the object to be repelled. For example, it may be desirable for the lubricant and the object to be repelled to be immiscible, such that the enthalpy of mixing between the lubricant and the object to be repelled is sufficiently high that they phase separate from each other when mixed together (e.g., water and oil).

It may also be desirable to use a lubricant with a lower surface energy than the object to be repelled so that the lubricant will not be displaced from the substrate surface to which the composition has been applied.

In the case where the object to be repelled is a low surface tension non-polar liquid (e.g., less than 30 mN/m), the lubricant may be a low surface energy liquid (e.g., less than 30 mJ/m² or less than 20 mJ/m²), such as fluorinated hydrocarbons. Examples of low surface energy liquids include, but are not limited to, perfluorotributylamine, perfluorotri-n-pentylamine, perfluorohexane, perfluoro(2-butyl-tetrahydrofuran), perfluorocycloether, perfluoro n-alkyl morpholines, perfluoroalkylethers, and perfluorotripropylamine.

In the case where the object to be repelled is a high surface tension liquid (e.g., water, fog, condensation) or a solidified fluid (e.g., ice, frost, etc.), the lubricant may be selected from higher surface energy liquids (i.e., 20 mJ/m² or higher). Examples of higher surface energy liquids include, but are not limited to polydimethylsiloxane, other liquid silicone elastomers or commercial food grade lubricants (e.g., KRYTOX^{™} FG lubricants), oils (e.g, olive oil, canola oil, vegetable oil, sunflower oil, their mixtures, etc.) and the like.

### The solvent

The solvent is configured to disperse the particles within the composition, and enable them to migrate to the substrate surface to which the composition is applied to form a porous structure on evaporation of the solvent. To provide this functionality, the solvent should be relatively volatile. In this respect, the solvent may have a vapour pressure greater than about 2kPa at room temperature, such as greater than about 10kPa at room temperature.

### Ratio of components

In the composition described herein, the total weight of the particles may be from about 0.1% to about 1%, such as from about 0.2% to about 0.5%, or from about 0.2% to about 0.3% of the total weight of the composition. In a preferred embodiment of the composition, the total weight of the particles may be from about 0.22 to about 0.33 % (such as from about 0.24 to about 0.28 %) of the total weight of the composition. In some cases, the total % weights of the particles given above may be relative to the total weight of the particle-lubricant mixture rather than the total weight of the complete composition (i.e. particle-lubricant-solvent mixture), i.e. the particle-lubricant mixture of the surface coating after evaporation of the solvent.

In an alternative embodiment of the composition, the total weight of the lubricant is from about 1 to about 99 % of the total weight of the composition, such as from about 20 to about 95% or from about 40 to about 90% or from about 60 to about 85% of the total weight of the composition.

In another embodiment of the composition, the total weight of the solvent is from about 1 to about 99 % of the total weight of the composition, such as from about 10 to about 75% or from about 20 to about 50% of the total weight of the composition.

In the composition described herein, the total weight of the particles in the composition may be up to 5% or up to 50% of the weight of the lubricant. Preferably, the total weight of the particles in the composition is from about 0.05 to about 5%, such as from about 0.1% to 4% (e.g. from about 0.1% or about 0.2% to about 2%) of the weight of the lubricant.

In the composition described herein, the total weight of the particles in the composition may be up to 5% of the weight of the solvent. Preferably, the total weight of the particles in the composition is from 0.1% to 4%, such as from about 0.15% to about 2.5% (e.g. from about 0.2% to about 2%) of the weight of the solvent.

In the composition described herein, the total weight of the lubricant in the composition may be up to 99% of the weight of the solvent. Preferably, the total weight of the lubricant in the composition is from about 10% to about 90% of the weight of the solvent, such as from about 20% to about 80%, from about 30% to about 70% or from about 40% to about 60% of the weight of the solvent.

For the avoidance of doubt, preferences, options, particular features and the like indicated for a given aspect, feature or parameter of the disclosure should, unless the context indicates otherwise, be regarded as having been disclosed in combination with any and all other preferences, options particular features and the like as indicated for the same or other aspects, features and parameters of the disclosure.

The term "about" as used herein, e.g. when referring to a measurable value (such as an amount or weight of a particular component in the reaction mixture), refers to variations of ±20%, ±10%, ±5%, ±1%, ±0.5%, or, particularly, ±0.1% of the specified amount.

For the avoidance of doubt, in this specification when we use the term "comprising" or "comprises" we mean that the extract or composition being described must contain the listed ingredient(s) but may optionally contain additional ingredients. When we use the term "consisting essentially of" or "consists essentially of" we mean that the extract or composition being described must contain the listed ingredient(s) and may also contain small (for example up to 20% by weight, or up to 10%, 5%, 1% or 0.1% by weight) of other ingredients provided that any additional ingredients do not affect the essential properties of the extract or composition. When we use the term "consisting of" or "consists of" we mean that the extract or composition being described must contain the listed ingredient(s) only.

The composition may consist of:
(i) Particles;
(ii) A lubricant; and
(iii) A solvent, wherein the particles, lubricant and solvent are as defined in Claim 1.

For example, the composition of the invention may consist of:
(i) Particles, selected from one or more of silica particles, carbon particles, transition metal or transition metal oxide particles and aluminium based particles. Examples of particles that may be used in the composition include, but are not limited to, mesoporous silica and/or silanised silica particles, soot/carbon black particles, hydrophobic sand particles, aluminium oxide or nitride particles, copper nano-spheres, silica nano-beads, iron oxide nano-powders, titianium nano-particles, tungsten oxide nano-powder and zinc oxide nano-wires;
(ii) A lubricant selected from one or more of perfluorinated hydrocarbons or organosilicone compound (e.g. silicone elastomer) and the like. In particular, the tertiary perfluoroalkylamines (such as perfluorotri-n-pentylamine, FC-70 by 3M, perfluorotri-n-butylamine FC-40, etc), perfluoroalkylsulfides and perfluoroalkylsulfoxides, perfluoroalkylethers, perfluorocycloethers (like FC-77) and perfluoropolyethers (such as KRYTOX family of lubricants by DuPont), perfluoroalkylphosphines and perfluoroalkylphosphineoxides as well as their mixtures can be used for these applications, as well as their mixtures with perfluorocarbons and any and all members of the classes mentioned. In addition, long-chain perfluorinated carboxylic acids (e.g., perfluorooctadecanoic acid and other homologues), fluorinated phosphonic and sulfonic acids, fluorinated silanes, and combinations thereof can be used. The perfluoroalkyl group in these compounds could be linear or branched and some or all linear and branched groups can be only partially fluorinated; and
(iii) A solvent selected from one or more of propanol (such as isopropyl alcohol), ethanol, methanol, ethyl acetate, acetone, hexane, pentane, toluene, chloroform and dichloromethane.

Alternatively, the composition of the invention may consist essentially of the abovementioned components, but may comprise less than 20%, such as less than 10%, 5%, 1% or 0.1% of additional components, such as surfactants, stabilisers and additives.

### Method for providing a composition of the disclosure

The composition described herein may be obtained using a method comprising mixing the particles, the lubricant and solvent together, wherein the particles, lubricant and solvent are as defined in Claim 1.

The particles, lubricant and solvent may be stirred together for at least 10 minutes. For example, from about 10 minutes to about 2 hours or from about 20 minutes to about 1 hour (such as about 30 minutes).

Without being bound by theory, it is thought that the stirring of the particles, the lubricant and solvent allows the particles to be dispersed within the composition, and further allows the lubricant to get between the particles.

The particles, lubricant and solvent may be added in any order. For example, the particles and solvent may be mixed together before being added to the lubricant, the particles and the lubricant may be mixed together before being added to the solvent, or the solvent and the lubricant may be mixed together before being added to the particles.

The ratio of the particles, the lubricant and the solvent are as previously described.

The method may be conducted in any suitable apparatus, such as an ultrasonic bath.

The method may be conducted at a temperature of from about -10 to about 60°C, such as from about 10°C to about 50°C, preferably from about 20 to about 40°C.

The method may be conducted at a pressure of from about 20 to about 200 kPa, such as about 90 to about 110 kPa (e.g. about 101.325 kPa).

### Method for providing a surface coating

The composition described herein may be used to provide a surface coating on a substrate surface using a method comprising: applying the composition to a substrate surface; and evaporating the solvent from the composition.

Evaporation of the solvent acts to reduce the overall volume of the composition and thus promotes transport of the particles to the substrate surface to enable the formation of a porous structure thereon. Evaporation of the solvent also facilitates the imbibition of the lubricant by the porous structure.

The composition may be applied to a substrate surface using any known technique. Examples of suitable techniques include, but are not limited to, spin coating, dip coating, spray coating, painting, printing and roll-to-roll coating.

The solvent may evaporate from the composition at room temperature, or heat may be applied to the substrate surface to increase evaporation of the solvent. If heat is used to increase evaporation of the solvent then the heat may be applied at a temperature of from about 30 to about 80 °C, such as from about 40 to about 50 °C.

At least about 80% of the solvent from the composition of the disclosure may be evaporated once the composition of the disclosure has been applied to the substrate surface. For example, at least about 90%, such as at least about 95% or 99% of 100%.

The substrate surface may comprise a polymer, metal, sapphire, glass, carbon in different forms, or ceramic.

Since the method can be performed in a single step, it is well suited to substrate surfaces where small confined, irregular or large-scale coating is required. For example, the inner surfaces of microfluidic channels could be coated, as well as complex shapes such as the outer surfaces of vehicles or large complex machinery (e.g. vehicle windows, wingmirrors, body, number plates, ships, boats and oil rigs). Other applications include inner surfaces of food packaging containers, outer surfaces of food processing equipment, inner surfaces of pipes, storage tanks and/or vessels (e.g. to lubricate flow and reduce residue), and outer surfaces of electronic device or displays. Furthermore, large area coatings could easily be applied to the outer surfaces of buildings to create water repellent and self-cleaning windows or facades (e.g. in the healthcare sector, such as nursing homes, to facilitate and even negate the need for regular cleaning).

The composition may be deposited to any desired thickness. Typically, the desired thickness is the minimum amount required to form a thermodynamically stable layer on the substrate surface, which may be dependent on particle size. For example, when the particles are nano-particles, the thickness of the composition deposited may be from about 10nm to about 900nm (such as from about 20nm to about 400nm). On the other hand, when the particles are micro-particles, the thickness of the composition deposited may be from about 10µm to about 900µm. If larger or smaller particles are used, the thickness of the composition deposited can be adjusted accordingly.

### Surface Coating

Once the composition described herein has been applied to a substrate surface and the solvent has evaporated, the substrate surface comprises a surface coating with a coefficient of less than 0.1 on a substrate surface (i.e. the surface coating that remains after the solvent has been evaporated). The surface coating comprises a porous structure formed by the plurality of particles, and a lubricant imbibed into the porous structure.

At least one of the viscosity and vapour pressure of the lubricant may be such that, after evaporation of the solvent, the surface coating is in the form of one or more of a liquid, suspension, colloid, mixture and fluid.

As described previously, the lubricant present in the surface coating may have a viscosity at room temperature of less than about 1000cSt, less than about 100cSt, and less than about 50cSt. Furthermore, the lubricant may have a vapour pressure of less than about 0.1 mmHg, such as less than about 0.01 mmHg, or less than about 0.0001 mmHg at room temperature. For example, the lubricant may have a vapour pressure of from about 0.00001 to about 0.1 mmHg or from about 0.001 to about 0.01 mmHg at room temperature.

The viscosity and vapour pressure of the lubricant may be such that, after application, the surface coating remains in the form of one or more of a liquid, suspension, colloid, mixture and fluid, such as a liquid suspension, at room temperature and pressure for at least 24 hours, such as from about 24 hours to one week or about two weeks or about six months or about 1 year.

The surface coating may comprise the composition described herein wherein at least 80% of the solvent has been evaporated. For example, at least about 90%, such as at least about 95% or 99% of 100%.

In a preferred embodiment of the surface coating, the total weight of the particles is from about 0.22 to about 0.33 % of the total weight of surface coating.

The surface coating may be a slippery liquid infused porous surface (SLIPS^{™}).

The surface coating may be fluidphobic/lyophobic, hydrophobic, oleophobic/lipophobic or omniphobic (i.e. where the surface exhibits both hydrophobic and oleophobic properties). The surface coating may have a contact angle of 90° < θ < 180°.

The surface coating may exhibit one or more of anti-adhesive and anti-fouling properties. The surface coating may prevent adhesion of a wide range of materials. As noted previously, these materials are referred to herein as the "object to be repelled". Examples of materials that may not stick to the surface include, but are not limited to, liquids, solids, and gases (or vapours).

For example, liquids such as water, oil-based paints, hydrocarbons and their mixtures, organic solvents, complex fluids such as crude oil, protein-containing fluids and the like can be repelled. The liquids may be both pure liquids and complex fluids.

The surface coating may also repel solids like bacteria, insects, fungi and the like and/or solids like ice, paper, sticky notes, or inorganic particle-containing paints and dust particles.

Examples of objects that may be repelled by the surface coating include, but are not limited to polar and non-polar liquids and their solidified forms, such as hydrocarbons and their mixtures (e.g., from pentane up to hexadecane and mineral oil, paraffinic extra light crude oil; paraffinic light crude oil; paraffinic light-medium crude oil; paraffinic-naphthenic medium crude oil; naphthenic medium-heavy crude oil; aromatic-intermediate medium-heavy crude oil; aromatic-naphthenic heavy crude oil, aromatic-asphaltic crude oil, etc.), ketones (e.g., acetone, etc.), alcohols (e.g., methanol, ethanol, isopropanol, dipropylene glycol, ethylene glycol, and glycerol, etc.), water (with a broad range of salinity, e.g., sodium chloride from 0 to 6.1 M; potassium chloride from 0 to 4.6 M, etc.), acids (e.g., concentrated hydrofluoric acid, hydrochloric acid, nitric acid, etc) and bases (e.g., potassium hydroxide, sodium hydroxide, etc), and ice, etc.

The object to be repelled may also include biological objects, such as insects, small animals, protozoa, bacteria, viruses, fungi, bodily fluids and tissues, proteins and the like; solid particles suspended in liquid; non-biological objects, such as dust, colloidal suspensions, spray paints, food items, common household materials, and the like; and adhesives or adhesive films.

The surface coating may have a coefficient of friction that is lower than that of polytetrafluoroethylene (PTFE or TEFLON) surface. For example, a coefficient of friction of less than 0.05, or even less than 0.04.

The coefficient of friction can be measured by sliding two surfaces against one another. The value of the coefficient will depend on the load applied to the surfaces, the sliding velocity, and the materials of the surfaces. For example, a reference surface, such as a polished steel, could be used to slide against the target surface (i.e. the surface comprising the surface coating described here) or a substantially identical surface could be slid against the target surface to obtain the coefficients of friction (both static and dynamic).

Two or more different objects may be repelled and, in certain situations, the combination of multiple objects may be more readily repelled as compared to just one object.

The surface coating may have low contact angle hysteresis. For example, contact angle hysteresis less than about 5°, 2.5°, 2°, or even less than 1°.

When a droplet of liquid meets a surface, the balance of surface tension forces due to liquid/solid, liquid/gas and solid/gas contributions etc, define the shape of the liquid droplet at the solid-liquid-gas interface (in accordance with Young's equation).

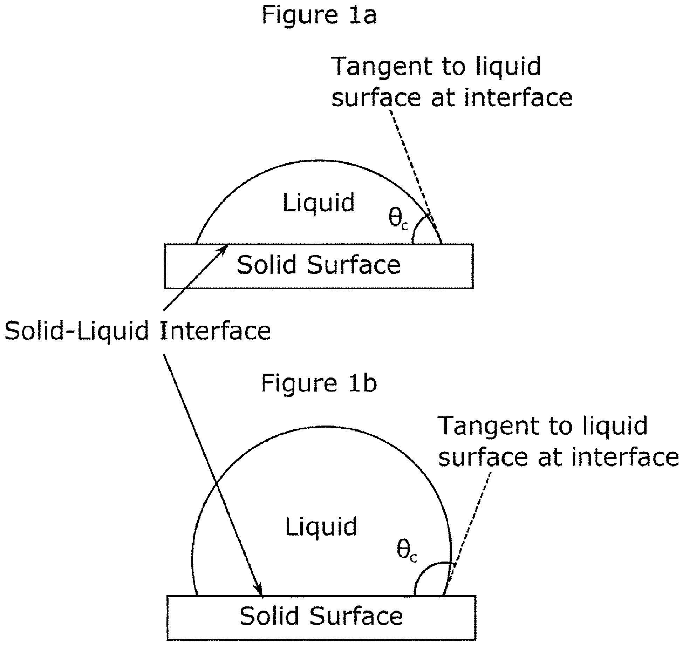

Figure 1a shows a liquid droplet on a solid surface which attracts a liquid. The liquid droplet defines an advancing contact angle with the surface. The advancing contact angle, θ_{c}, is defined between the plane of the solid surface and the tangent of the surface of the liquid droplet at the point of the solid-liquid interface. For surfaces that attract the liquid, this contact angle is typically <90°.

Figure 1b shows a liquid droplet on a solid surface which repels the liquid. Due to the repulsion, the contact angle, θ_{c}, is typically >90° (for example, over 120° or even over 150°).

For a droplet resting on a soft surface, the vertical component of the droplet's surface tension deforms the surface and creates a wetting ridge. If the surface comprises the surface coating described herein, the liquid forms a sessile droplet rather than a liquid lens. Since the droplet rests on a layer of lubricant retained by the porous structure, however, the region close to the solid surface shows a more complex shape with a wetting ridge created by the balance of interfacial forces at the line of contact between the droplet, the lubricant and the air.

### Examples

The composition, surface coating and associated methods described herein will be further described by reference to the following, non-limiting examples.

### Preparation of composition and application to a surface

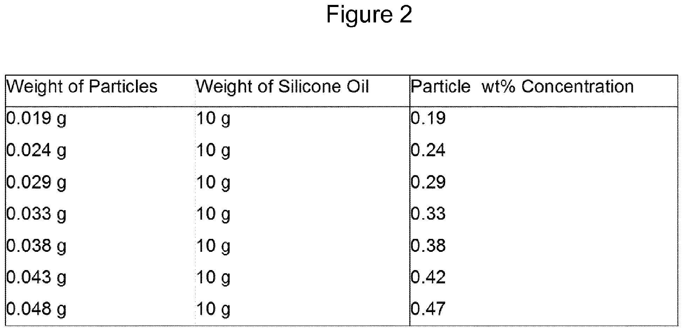

Glaco Mirror-coat Zero (comprising a concentrate formed from 0.1-3.0 wt% silanised silica particles and 85-90 wt% isopropyl alcohol; and a propellant formed from 10-15 wt% liquified petroleum gas) and 20 cSt silicone oil (Sigma Aldrich CAS 63148629) were combined in glass vials to provide the components in each of the ratios shown in Figure 2.

The resulting solution was placed into a sonic bath (Ultrawave U100) for 30 minutes. 2 ml of the solution was then deposited using a pipette onto a clean glass slide. The slide was left uncovered for two hours in a fume hood and the solvent allowed to evaporate. The sample was then covered and the solvent allowed to evaporate for a further 22 hours. Compressed air was used to remove any excess oil from the system by blowing the air across the surface. After drying, the sample was left on a flat surface for a further hour to allow the oil layer to relevel itself.

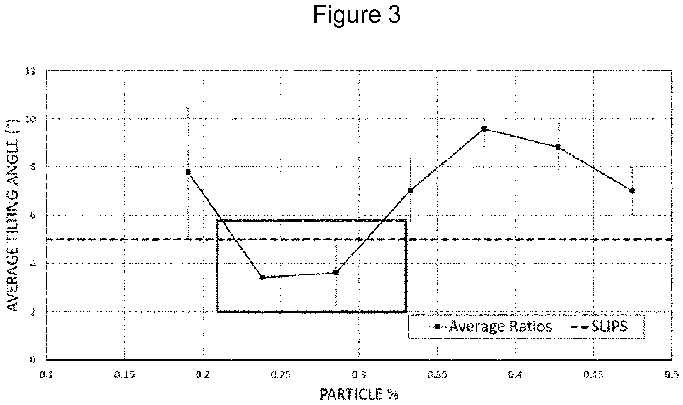

The sliding angle (i.e. the angle of tilt relative to the horizontal at which the liquid droplet slides off the surface) was then determined by placing a liquid droplet onto the surface coating and tilting the slide until the liquid droplet slid off. The method was repeated for each of the mixture ratios in Figure 2, the results of which are shown in Figure 3. At concentrations between 0.22% and 0.33% (boxed on the graph), the sliding angle was found to be below 5° (dashed line), which may be preferable for certain applications.

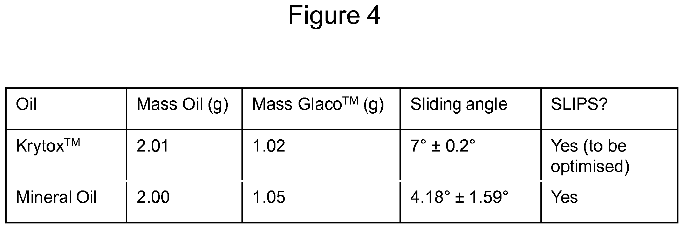

Different lubricants were then tested using Glaco Mirror-coat Zero as the particle-solvent mixture. The lubricant and Glaco components were weighed and mixed according to the ratios shown in Figure 4.

The mixtures were agitated in an ultrasonic bath for 30 minutes after mixing to ensure full dispersion of the particles.

Samples of glass were coated by depositing the mixture onto the surface of a glass slide, forming a puddle, which completely covered the surface of the slide. The samples were left to stand for 2 hours to allow the solvent to evaporate. The excess lubricating liquid was removed by gently blowing the surface with a stream of compressed air.

To characterise the mineral oil-based surface coating, a droplet with a volume of 2 µL was placed on the sample. The sample was then placed on a kruss DSA 30 drop shape analyser. The sample was tilted until the droplet started to move from its initial position. This procedure was repeated three times with separate droplets at different positions.

To characterise the perfluoropolyether "Krytox" oil-based surface coating, a droplet with a volume of 10 µL was placed on the sample. The sample was then placed on a kruss DSA 30 drop shape analyser. The sample was tilted until the droplet started to move from its initial position. This procedure was repeated three times with separate droplets at different positions.

In the case of the mineral oil-based surface coating, the sliding angle was found to be below 5°, which indicates a SLIPS surface. In the case of the perfluoropolyether "Krytox" oil-based surface coating, the surface was found to be close to a 5° sliding angle. This indicates that some optimisation of the formulation is required, but may still be considered a SLIPS surface.

## Claims

1. A composition for providing a surface coating with a coefficient of friction of less than 0.1 on a substrate surface, wherein the composition comprises:
(i) Particles;
(ii) A lubricant; and
(iii) A solvent,
wherein the particles (i) are selected from one or more of silica particles, carbon particles, transition metal or transition metal oxide particles and aluminium based particles; the lubricant (ii) is selected from one or more of oils, silicone oils, vegetable oils, mineral oils, paraffin oils, choline phosphonium and sulphonium and the solvent (iii) is selected from one or more of propanol, ethanol, methanol, ethyl acetate, acetone, pentane, hexane, toluene, chloroform and dichloromethane.

2. A composition according to claim 1, wherein at least one of the viscosity and vapor pressure of the lubricant are such that the surface coating is in the form of one or more of a liquid, suspension, colloid, mixture and fluid.

3. A composition according to claim 1 or 2, wherein the composition consists essentially of (i), (ii) and (iii).

4. A composition according to any one of the preceding claims, wherein the total weight of the particles (i) is one or more of from about 0.1% to about 1%, from about 0.2% to about 0.5%, and from about 0.2% to about 0.3% of the total weight of the composition and/or the total weight of the lubricant is from about 1 to about 99 % of the total weight of the composition and/or the total weight of the solvent is from about 1 to about 99 % of the total weight of the composition.

5. A composition according to any one of claims 1 to 3, wherein the total weight of the particles in the composition is up to 5% of the weight of the lubricant, preferably, wherein the total weight of the particles in the composition is from 0.1% to 4% of the weight of the lubricant.

6. A composition according to claims 1 or 5, wherein the total weight of the particles in the composition is up to 5% of the weight of the solvent, preferably, wherein the total weight of the particles in the composition is from 0.1% to 4% of the weight of the solvent.

7. A composition according to any one of claims 1, 5 or 6, wherein the total weight of the lubricant in the composition is up to 99% of the weight of the solvent, preferably, wherein the total weight of the lubricant in the composition is from about 10 to about 90% of the weight of the solvent.

8. A composition according to any one of the preceding claims, where the particles (i) have an average diameter of one or more of from about 10nm to about 100µm or from about 20nm to about 50µm, preferably one or more of from about 10nm to about 900nm or from about 20nm to about 400nm.

9. A composition according to any one of the preceding claims, wherein the lubricant (ii) has a viscosity at room temperature of one or more of less than about 1000 cSt, less than about 100 cSt, and less than about 50 cSt.

10. A composition according to any one of the preceding claims, wherein the lubricant (ii) has a vapour pressure at room temperature of one or more of less than about 0.1mmHg, less than about 0.01mmHg, and less than about 0.0001mmHg.

11. A composition according to any one of the preceding claims, wherein the solvent (iii) has a vapour pressure at room temperature of greater than about 2kPa.

12. A method for providing a composition as defined in any one of claims 1 to 11 comprising mixing the particles (i), lubricant (ii) and solvent (iii) together.

13. A method for providing a surface coating on a substrate surface comprising:
Applying the composition as defined in any one of claims 1 to 11 to a substrate surface; and
Evaporating the solvent from the composition.

14. A surface coating on a substrate surface obtained using a method as defined in any one of claims 12 or 13.

15. A surface coating according to claim 14, wherein the total weight of the particles in the surface coating is from about 0.22 to about 0.33 % of the total weight of the surface coating.

## Patentansprüche

1. Zusammensetzung zur Bereitstellung einer Oberflächenbeschichtung mit einem Reibungskoeffizienten unter 0,1 auf einer Substratfläche, wobei die Zusammensetzung umfasst:
(i) Teilchen;
(ii) ein Schmiermittel; und
(iii) ein Lösungsmittel,
wobei die Teilchen (i) aus einem oder mehreren von Siliziumdioxidteilchen, Kohlenstoffteilchen, Übergangsmetall- oder Übergangsmetalloxidteilchen und Teilchen auf Aluminiumbasis ausgewählt sind; das Schmiermittel (ii) aus einem oder mehreren von Ölen, Silikonölen, pflanzlichen Ölen, Mineralölen, Paraffinölen, Cholin Phosphonium und Sulfonium ausgewählt ist und das Lösungsmittel (iii) aus einem oder mehreren von Propanol, Ethanol, Methanol, Ethylacetat, Aceton, Pentan, Hexan, Toluol, Chloroform und Dichlormethan ausgewählt ist.

2. Zusammensetzung nach Anspruch 1, wobei mindestens eines von der Viskosität und dem Dampfdruck des Schmiermittels so ist, dass sich die Oberflächenbeschichtung in der Form von einem oder mehreren von einer Flüssigkeit, einer Suspension, einem Kolloid, einer Mischung und einem Fluid befindet.

3. Zusammensetzung nach Anspruch 1 oder 2, wobei die Zusammensetzung im Wesentlichen aus (i), (ii) und (iii) besteht.

4. Zusammensetzung nach einem der vorstehenden Ansprüche, wobei das Gesamtgewicht der Teilchen (i) eines oder mehrere von etwa 0,1% bis etwa 1%, etwa 0,2% bis etwa 0,5% und etwa 0,2% bis etwa 0,3% des Gesamtgewichts der Zusammensetzung beträgt und/oder das Gesamtgewicht des Schmiermittels etwa 1 bis etwa 99% des Gesamtgewichts der Zusammensetzung beträgt und/oder das Gesamtgewicht des Lösungsmittels etwa 1 bis etwa 99% des Gesamtgewichts der Zusammensetzung beträgt.

5. Zusammensetzung nach einem der Ansprüche 1 bis 3, wobei das Gesamtgewicht der Teilchen in der Zusammensetzung bis zu 5% des Gewichts des Schmiermittels beträgt, wobei, vorzugsweise, das Gesamtgewicht der Teilchen in der Zusammensetzung 0,1% bis 4% des Gewichts des Schmiermittels beträgt.

6. Zusammensetzung nach Anspruch 1 oder 5, wobei das Gesamtgewicht der Teilchen in der Zusammensetzung bis zu 5% des Gewichts des Lösungsmittels beträgt, wobei, vorzugsweise, das Gesamtgewicht der Teilchen in der Zusammensetzung 0,1% bis 4% des Gewichts des Lösungsmittels beträgt.

7. Zusammensetzung nach einem der Ansprüche 1, 5 oder 6, wobei das Gesamtgewicht des Schmiermittels in der Zusammensetzung bis zu 99% des Gewichts des Lösungsmittels beträgt, wobei, vorzugsweise, das Gesamtgewicht des Schmiermittels in der Zusammensetzung etwa 10 bis etwa 90% des Gewichts des Lösungsmittels beträgt.

8. Zusammensetzung nach einem der vorstehenden Ansprüche, wobei die Teilchen (i) einen mittleren Durchmesser von einem oder mehreren von etwa 10 nm bis etwa 100 µm oder etwa 20 nm bis etwa 50 µm, vorzugsweise von einem oder mehreren von etwa 10 nm bis etwa 900 nm oder etwa 20 nm bis etwa 400 nm, aufweisen.

9. Zusammensetzung nach einem der vorstehenden Ansprüche, wobei das Schmiermittel (ii) eine Viskosität bei Raumtemperatur von einem oder mehreren von unter etwa 1000 cSt, unter etwa 100 cSt und unter etwa 50 cSt aufweist.

10. Zusammensetzung nach einem der vorstehenden Ansprüche, wobei das Schmiermittel (ii) einen Dampfdruck bei Raumtemperatur von einem oder mehreren von unter etwa 0,1 mmHg, unter etwa 0,01 mmHg und unter etwa 0,0001 mmHg aufweist.

11. Zusammensetzung nach einem der vorstehenden Ansprüche, wobei das Lösungsmittel (iii) einen Dampfdruck bei Raumtemperatur über etwa 2 kPa aufweist.

12. Verfahren zur Bereitstellung einer Zusammensetzung gemäß Definition in einem der Ansprüche 1 bis 11, umfassend Vermischen der Teilchen (i), des Schmiermittels (ii) und des Lösungsmittels (iii) miteinander.

13. Verfahren zur Bereitstellung einer Oberflächenbeschichtung auf einer Substratfläche, umfassend:
Aufbringen der Zusammensetzung gemäß Definition in einem der Ansprüche 1 bis 11 auf eine Substratfläche; und
Abdampfen des Lösungsmittels aus der Zusammensetzung.

14. Oberflächenbeschichtung auf einer Substratfläche, erhalten mittels eines Verfahrens gemäß Definition in einem der Ansprüche 12 oder 13.

15. Oberflächenbeschichtung nach Anspruch 14, wobei das Gesamtgewicht der Teilchen in der Oberflächenbeschichtung etwa 0,22 bis etwa 0,33% des Gesamtgewichts der Oberflächenbeschichtung beträgt.

## Revendications

1. Composition permettant de fournir un revêtement de surface avec un coefficient de frottement inférieur à 0,1 sur une surface de substrat, dans laquelle la composition comprend :
(i) des particules :
(ii) un lubrifiant ; et
(iii) un solvant,
dans laquelle les particules (i) sont sélectionnées parmi une ou plusieurs parmi des particules de silice, des particules de carbone, des particules de métal de transition ou d'oxyde de métal de transition et des particules à base d'aluminium ; le lubrifiant (ii) est sélectionné parmi une ou plusieurs parmi des huiles, des huiles de silicone, des huiles végétales, des huiles minérales, de la paraffine, de la choline du phosphonium et du sulfonium et le solvant (iii) est sélectionné parmi un ou plusieurs parmi le propanol, l'éthanol, le méthanol, l'éthyl-acétate, l'acétone, le pentane, l'hexane, le toluène, le chloroforme et le dichlorométhane.

2. Composition selon la revendication 1, dans laquelle au moins une de la viscosité et de la pression de vapeur du lubrifiant sont telles que le revêtement de surface est sous la forme d'un ou plusieurs parmi un liquide, une suspension, un colloïde, un mélange et un fluide.

3. Composition selon la revendication 1 ou 2, dans laquelle la composition est essentiellement constituée de (i), (ii) et (iii).

4. Composition selon l'une quelconque des revendications précédentes, dans laquelle le poids total des particules (i) est d'un ou plusieurs parmi environ 0,1 % à environ 1 %, d'environ 0,2 % à environ 0,5 %, et d'environ 0,2 % à environ 0,3 % du poids total de la composition et/ou le poids total du lubrifiant est d'environ 1 à environ 99 % du poids total de la composition et/ou le poids total du solvant est d'environ 1 à environ 99 % du poids total de la composition.

5. Composition selon l'une quelconque des revendications 1 à 3, dans laquelle le poids total des particules dans la composition peut atteindre 5 % du poids du lubrifiant, de préférence, dans laquelle le poids total des particules dans la composition est compris entre 0,1 % et 4 % du poids du lubrifiant.

6. Composition selon la revendications 1 ou 5, dans laquelle le poids total des particules dans la composition peut atteindre 5 % du poids du solvant, de préférence, dans laquelle le poids total des particules dans la composition est compris entre 0,1 % et 4 % du poids du solvant.

7. Composition selon l'une quelconque des revendications 1, 5 ou 6, dans laquelle le poids total du lubrifiant dans la composition peut atteindre 99 % du poids du solvant, de préférence, dans laquelle le poids total du lubrifiant dans la composition est compris entre environ 10 et environ 90 % du poids du solvant.

8. Composition selon l'une quelconque des revendications précédentes, dans laquelle les particules (i) présentent un diamètre moyen d'un ou plusieurs parmi d'environ 10 nm à environ 100 µm ou d'environ 20 nm à environ 50 µm, de préférence un ou plusieurs parmi d'environ 10 nm à environ 900 nm ou d'environ 20 nm à environ 400 nm.

9. Composition selon l'une quelconque des revendications précédentes, dans laquelle le lubrifiant (ii) présente une viscosité à la température ambiante d'un ou plusieurs parmi moins d'environ 1000 cSt, moins d'environ 100 cSt et moins d'environ 50 cSt.

10. Composition selon l'une quelconque des revendications précédentes, dans laquelle le lubrifiant (ii) présente une pression de vapeur à la température ambiante d'un ou plusieurs parmi moins d'environ 0,1 mmHg, moins d'environ 0,01 mmHg et moins d'environ 0,0001 mmHg.

11. Composition selon l'une quelconque des revendications précédentes, dans laquelle le solvant (iii) présente une pression de vapeur à la température ambiante supérieure à environ 2 kPa.

12. Procédé de fourniture d'une composition telle que définie dans l'une quelconque des revendications 1 à 11, comprenant le mélange des particules (i), du lubrifiant (ii) et du solvant (iii) ensemble.

13. Procédé de fourniture d'un revêtement de surface sur une surface de substrat, comprenant :
l'application de la composition telle que définie dans l'une quelconque des revendications 1 à 11 à une surface du substrat ; et
l'évaporation du solvant de la composition.

14. Revêtement de surface sur une surface de substrat obtenue en utilisant un procédé tel que défini dans l'une quelconque des revendications 12 ou 13.

15. Revêtement de surface selon la revendication 14, dans lequel le poids total des particules dans le revêtement de surface est d'environ 0,22 à environ 0,33 % du poids total du revêtement de surface.
